# FASCICULE DE BREVET EUROPEEN

(11) **EP 0 754 711 B1**
(45) Date de publication et mention de la délivrance du brevet: **01.09.1999**
(21) Numéro de dépôt: 96201795.0
(22) Date de dépôt: 28.06.1996
(51) Int. Cl.: C08F 255/02, C08K 5/00

(54) **Polymère du propylène, procédé pour son obtention, utilisation et objets le contenant**
Propylenpolymer, Verfahren zu seiner Herstellung, Verwendung desselben und Objekte daraus
Polymer of propylene, production process thereof, use and objects containing it

(30) Priorité: 11.07.1995 FR 9508490
(43) Date de publication de la demande: 22.01.1997
(73) Titulaire: Solvay Polyolefins Europe-Belgium (Société Anonyme), 1050 Bruxelles (BE)
(72) Inventeur: Mestanza, Raphael, 4611 JV Bergen op Zoom (NL); Graebling, Didier, 67201 Eckbolsheim (FR); Lambla, Morand, 67800 Hoenheim (FR)
(74) Mandataire: Troch, Geneviève

(56) Documents cités:
- DE-B- 1 250 119
- ADVANCES IN POLYMER TECHNOLOGY, vol. 12, no. 3, 1993, NEW-YORK, pages 263-269, XP000383265 B.K. KIM ET AL: "cross-linking of polypropylene by peroxide and multifunctional monomer during reactive extrusion"

## Description

La présente invention concerne un polymère du propylène de propriétés rhéologiques modifiées. Elle concerne également un procédé d'obtention de ce polymère ainsi que son utilisation pour le façonnage d'objets par les procédés d'extrusion, de calandrage, d'injection et de thermoformage ainsi que pour la fabrication de mousses. Elle concerne enfin des objets façonnés contenant ce polymère.

Les polymères du propylène, appelés ci-après plus simplement polypropylène, sont connus pour leurs propriétés mécaniques ainsi que pour leur transparence et leur résistance à la chaleur. Leur coût relativement peu élevé en fait un matériau de choix pour un grand nombre d'applications telles que la formation d'objets façonnés.

Toutefois leurs propriétés rhéologiques en fondu sont telles qu'ils peuvent difficilement être mis en oeuvre par certaines méthodes telles que l'extrusion, le calandrage, l'injection et le thermoformage. Ces polymères sont en outre peu adaptés à la formation de mousses.

On a déjà tenté d'améliorer les propriétés du polypropylène en traitant thermiquement un mélange contenant du polypropylène, un peroxyde organique et un agent de réticulation choisi parmi le divinylbenzène, les allylcyanurates ainsi que des acrylates particuliers (JP-A-59/093711).

On obtient ainsi un polymère présentant un excellent brillant superficiel, une bonne résistance à la chaleur, une vitesse de cristallisation élevée, une grande tension au point de fusion et une bonne rigidité.

Cependant lorsque l'agent de réticulation est un acrylate, les propriétés rhéologiques du polymère restent insuffisantes pour certaines applications telles que le thermoformage et la fabrication de mousses.

Par ailleurs la demande de brevet EP-A-601635 (SOLVAY) divulgue que des compositions obtenues par mélange en fondu de polypropylène en présence de polyéthylène et d'au moins un composé fonctionnel présentent une tenue en fondu caractérisée par une viscosité élongationnelle élevée à bas gradient de vitesse et par une augmentation de la résistance à la déformation lors de l'allongement ou de l'extension.

Toutefois l'obtention de ces bonnes propriétés rhéologiques en fondu est liée à la présence du polyéthylène qui modifie les propriétés physiques et mécaniques du polypropylène, ce qui n'est pas toujours souhaité. On observe notamment une réduction de la transparence ou de la tenue à hautes températures.

On a maintenant trouvé un polymère du propylène qui présente des propriétés rhéologiques en fondu satisfaisantes et en particulier une augmentation de la résistance à la déformation lors de l'allongement ou de l'extension et qui ne présente pas les inconvénients des polymères appartenant à l'art antérieur.

En conséquence, la présente invention concerne un polymère du propylène obtenu par mélange en fondu de :
- 100 parties en poids de polypropylène ;
- de 0,01 à 10 parties en poids d'un composé fonctionnel (a) comprenant au moins 2 groupements acrylate;
- au moins 0,005 partie en poids d'un composé soufré (b) choisi parmi les sulfures de thiurame, et
- de 0,01 à 5 parties en poids d'un composé (c) susceptible de générer des radicaux libres.

Le polypropylène utilisable selon l'invention est choisi parmi les homopolymères du propylène et les copolymères de ce dernier contenant au moins 50 % en mole de propylène et au moins un autre monomère choisi parmi les α-oléfines contenant de 2 à 20 atomes de carbone, les acides organiques insaturés et leurs dérivés, les esters vinyliques, les composés vinyliques aromatiques, les vinylsilanes ainsi que les dioléfines. De préférence le, ou les autres monomères sont choisis parmi les α-oléfines et plus particulièrement parmi l'éthylène et le 1-butène.

Les polypropylènes préférés selon la présente invention sont les copolymères du propylène.

Par copolymères du propylène on entend aussi bien les copolymères statistiques du propylène que les copolymères à blocs de ce dernier.

Les premiers sont généralement constitués de chaînes macromoléculaires dans lesquelles sont répartis statistiquement les monomères. La teneur en propylène de ces copolymères statistiques est le plus souvent supérieure à 70 % en mole, de préférence supérieure ou égale à 75 % en mole. Les seconds sont constitués de blocs distincts de composition variable; chaque bloc consistant en un homopolymère du propylène ou d'une autre α-oléfine ou en un copolymère statistique comprenant du propylène et au moins un autre monomère choisi parmi les monomères cités ci-avant.

Les copolymères à blocs du propylène sont généralement obtenus par polymérisation en plusieurs étapes consécutives dans lesquelles on prépare successivement les différents blocs.

Les copolymères à blocs du propylène conviennent particulièrement bien et, parmi ceux-ci, ceux qui contiennent de 30 à 90 % en poids d'un premier bloc qui est un homopolymère du propylène et de 70 à 10 % en poids d'un second bloc qui est un copolymère statistique du propylène contenant de 40 à 60 % en mole d'éthylène donnent de particulièrement bons résultats.

Il va de soi que des polymères du propylène obtenus en mettant en oeuvre plusieurs polypropylènes tels que définis ci-avant ne sont pas exclus de la présente invention.

Les composés fonctionnels (a) utilisables pour l'obtention des polymères du propylène selon la présente invention contiennent généralement au maximum 7 groupements acrylate. Les composés (a) qui contiennent de 3 à 5 groupements acrylate donnent de bons résultats. A titre d'exemples préférés de ces composés, on peut citer les composés suivants communément appelés triméthylol-propane-triacrylate, triméthylol-propane-éthoxylate-triacrylate, glycérol-propoxylate-triacrylate, pentaérythritol-triacrylate, di-triméthylol-propane-tétraacrylate, pentaérythritol-tétraacrylate, pentaérythritol-éthoxylate-tétraacrylate, triméthylol-propane-triméthacrylate et pentaérythritol-éthoxylate-triacrylate. Il va de soi qu'un ou plusieurs composés (a) peuvent être mis en oeuvre.

Toutes autres choses étant égales le triméthylol-propane-triacrylate, le triméthylol-propane-éthoxylate-triacrylate, le pentaérythritol-triacrylate, le di-triméthylol-propane-tétraacrylate, le pentaérythritol-éthoxylate-tétraacrylate donnent de particulièrement bons résultats.

La quantité de composé fonctionnel (a) est le plus souvent d'au moins 0,05 partie en poids, de préférence d'au moins 0,5 partie en poids. On obtient de bons résultats lorsque cette quantité est inférieure ou égale à 6 parties en poids et plus particulièrement inférieure ou égale à 2 parties en poids. Des quantités de 0,5 à 2 parties en poids pour 100 parties en poids de polypropylène conviennent particulièrement bien.

Les sulfures de thiurame (composés (b)) utilisables pour l'obtention des polymères du propylène selon l'invention répondent à la formule générale 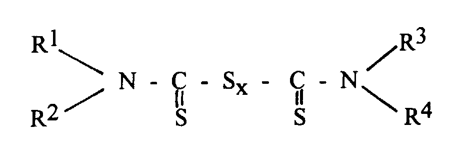 dans laquelle x est égal à 1, 2 ou 4, R¹, R², R³ et R⁴, qui peuvent être identiques ou différents, représentent un radical alkyle renfermant de 1 à 10 atomes de carbone ou un radical phényle, R¹ et R² et R³ et R⁴ pouvant respectivement former ensemble un radical divalent de formule -(CH₂)ₙ- où n est égal à 5 ou 6. Les sulfures de thiurame dans lesquels x est égal à 2 conviennent particulièrement bien.

A titre d'exemples préférés de composé (b), on peut citer le disulfure de tétraéthylthiurame, le disulfure de tétraméthylthiurame, le disulfure de tétraisopropylthiurame, le disulfure de dicyclopentaméthylthiurame et le disulfure de diméthyldiphénylthiurame. Le disulfure de tétraéthylthiurame convient particulièrement bien.

Le sulfure de thiurame peut être mis en oeuvre en quantité très faible. Des résultats très significatifs sont déjà obtenus pour des quantités aussi faibles que 0,01 partie en poids pour 100 parties en poids de polypropylène. On obtient de bons résultats lorsque cette quantité est d'au moins 0,015 partie en poids. La quantité maximale de sulfure de thiurame n'est généralement pas critique. On préfère toutefois qu'elle soit inférieure ou égale à 0,1 partie en poids, de préférence inférieure ou égale à 0,05 partie en poids. Des quantités de 0,015 à 0,05 partie en poids pour 100 parties en poids de polypropylène donnent de particulièrement bons résultats.

Le composé (c) susceptible de générer des radicaux libres est le plus souvent choisi parmi les peroxydes organiques, les persulfates et les composés diazo. A titre d'exemple de ces composés, on peut citer le N-bromosuccinimide, les peroxydes de benzoyle et de dicumyle, l'hydroperoxyde de cumène, le 2,5-diméthyl-2,5-ditertiobutylperoxyhexane, les persulfates de potassium ou d'ammonium, l'azobisisobutyronitrile, etc.

Les composés qui conviennent le mieux sont ceux qui se décomposent aux températures auxquelles est effectué le mélange en fondu. Les peroxydes sont généralement préférés. Parmi ceux-ci, le 2,5-diméthyl-2,5-ditertiobutylperoxyhexane, le tertbutylcumyl peroxyde et le dicumyle peroxyde donnent de bons résultats.

La quantité de composé (c) mis en oeuvre est le plus souvent supérieure ou égale à 0,01 partie en poids. Elle est en outre généralement inférieure ou égale à 1 partie en poids, plus particulièrement inférieure ou égale à 0,1 partie en poids. Des quantités de 0,01 à 0,1 partie en poids pour 100 parties en poids de polypropylène donnent de bons résultats.

Les polymères du propylène selon la présente invention sont obtenus par mélange en fondu d'un polypropylène en présence des composés (a), (b) et (c) décrits ci-avant.

Le plus souvent ce mélange en fondu est réalisé dans des conditions telles qu'il y ait réaction au moins partielle des molécules des composés (a) et (b) entre elles et/ou avec le polypropylène.

Les conditions dans lesquelles est effectué ce mélange ne sont pas critiques pour autant qu'elles induisent la fusion au moins partielle du polypropylène. De préférence elles sont telles qu'il y a fusion complète du polypropylène.

Généralement le mélange est effectué à une température ne dépassant pas 400 °C, de préférence pas 300 °C et plus particulièrement pas 250 °C.

La température minimale à laquelle le mélange en fondu est généralement effectué est supérieure ou égale à 130 °C, de préférence supérieure ou égale à 150 °C et plus particulièrement supérieure ou égale à 180 °C. On obtient de très bons résultats lorsque cette température est supérieure ou égale à 180 °C et inférieure ou égale à 230 °C.

La durée du mélange est choisie en tenant compte de la nature des composés mis en oeuvre et de la température à laquelle il est effectué.

Cette durée varie généralement de 5 secondes à 120 minutes, le plus souvent de 10 secondes à 30 minutes.

Le mélange est effectué dans tout dispositif connu à cet effet. Ainsi on peut utiliser des malaxeurs internes ou externes. Les malaxeurs internes sont les plus appropriés et parmi ceux-ci les malaxeurs discontinus de type BRABENDER et les malaxeurs continus tels que les extrudeuses.

Les extrudeuses conviennent particulièrement bien. L'ordre d'introduction des différents composants dans le malaxeur n'est pas critique.

On peut indifféremment les introduire isolément et successivement ou réaliser un prémélange des différents constituants les uns avec les autres ou d'une partie seulement de ces constituants.

Les polymères selon la présente invention peuvent également contenir d'autres additifs conventionnels tels que par exemple des stabilisants, des antioxydants, des lubrifiants, des agents antistatiques, des agents de nucléation, des agents moussants, des fibres de verre ou toutes autres charges. En ce qui concerne les stabilisants et les antioxydants, on constate qu'il s'avère avantageux de les introduire au plus tôt dans la masse fondue contenant le polypropylène et les composés (a), (b) et (c).

Les polymères du propylène selon la présente invention présentent les caractéristiques essentielles du polypropylène à savoir de bonnes propriétés mécaniques, une bonne résistance à la chaleur et une transparence élevée. Ils possèdent également le plus souvent des propriétés rhéologiques et viscoélastiques particulièrement intéressantes. On constate en effet qu'ils présentent généralement à l'état fondu, une augmentation de la résistance à la déformation lors de l'allongement ou de l'extension. Un tel phénomène est généralement appelé "durcissement structural sous contrainte". Il peut aisément être caractérisé par la détermination, pour une température et une vitesse d'élongation données, de la variation de la viscosité élongationnelle du polymère à l'état fondu en fonction de la durée d'élongation. Soumis à de tels tests, les polymères du propylène selon la présente invention présentent une augmentation de la viscosité élongationnelle. Un tel comportement les rend particulièrement intéressants pour l'obtention d'objets façonnés par injection et par extrusion et en particulier par extrusion- ou injection-soufflage, thermoformage ou enduction (voir par exemple ANTEC 92/569). Ces différents procédés de mise en oeuvre peuvent en outre être effectués à des cadences élevées. Une telle propriété est également essentielle pour la fabrication de mousses. De telles utilisations des polymères du propylène selon l'invention, de même que les objets façonnés contenant lesdits polymères, constituent dès lors des aspects supplémentaires de la présente invention.

On remarque également que les polymères du propylène selon la présente invention contiennent peu et avantageusement pas d'agglomérats de viscosité plus élevée susceptibles d'altérer les objets façonnés les contenant.

La présente invention concerne enfin un procédé d'obtention d'un polymère du propylène comprenant une étape de mélange en fondu de:
- 100 parties en poids d'un polypropylène;
- de 0,01 à 10 parties en poids d'un composé fonctionnel (a) choisi parmi les composés comprenant au moins 2 groupements acrylate;
- au moins 0,005 partie en poids d'un composé soufré (b) choisi parmi les sulfures de thiurame; et
- de 0,01 à 5 parties en poids d'un composé (c) susceptible de générer des radicaux libres.

Les différentes caractéristiques de ce procédé sont identiques à celles décrites ci-avant en rapport avec les polymères du propylène selon la présente invention.

Le procédé selon la présente invention présente l'avantage d'être particulièrement simple à mettre en oeuvre. Il permet également d'obtenir de manière reproductible et dans des laps de temps relativement courts les polymères du propylène présentant les propriétés avantageuses décrites ci-avant.

Les exemples suivants servent à illustrer l'invention.

Dans ces exemples, les polymères du propylène sont obtenus à l'aide d'une extrudeuse double vis corotative de type WERNER & PFLEIDERER ZSK 30 dont les vis sont constituées successivement des zones d'alimentation, de mélange et de dévolatilisation. La température de la zone d'alimentation est de 160 °C à l'entrée et de 180 °C à la sortie; la température de la zone de mélange est de 190 °C à l'entrée et de 210 °C à la sortie, la température de la zone de dévolatilisation est de 210 °C.

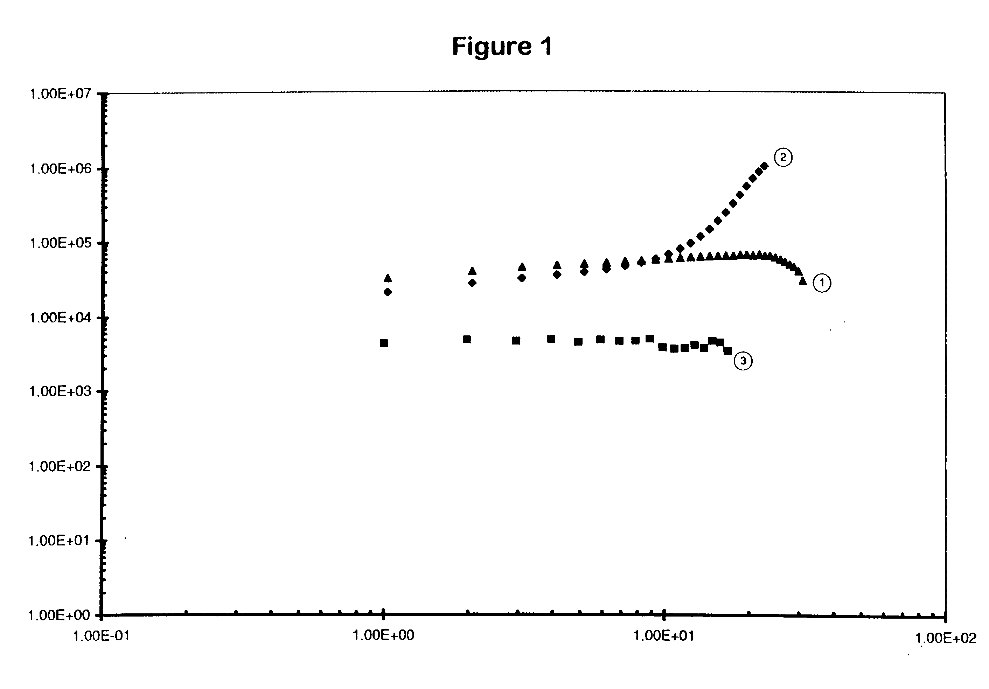

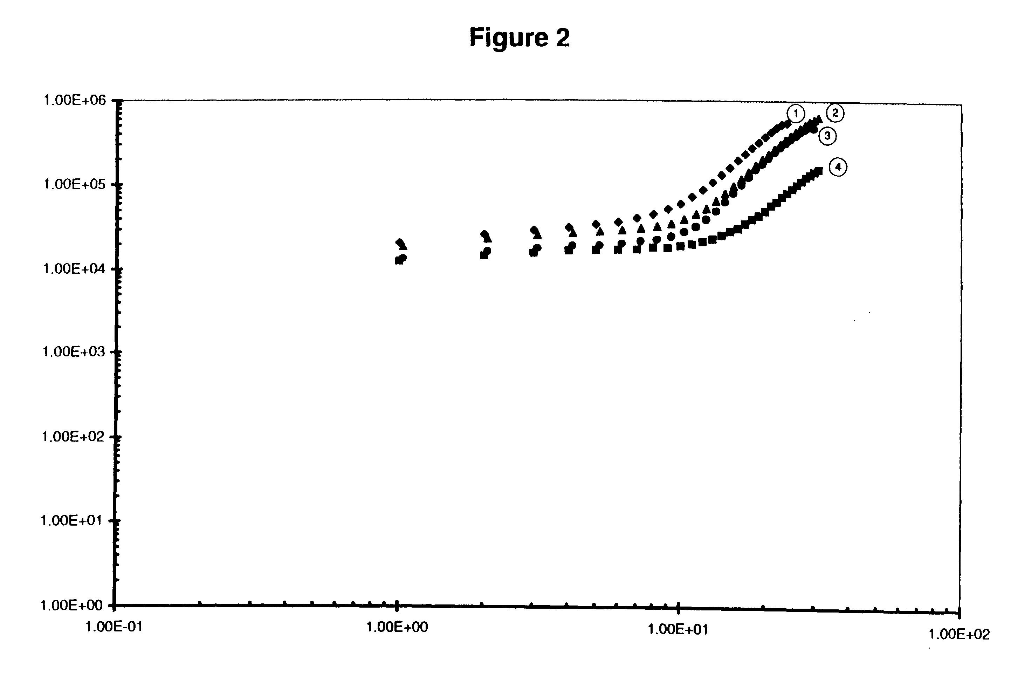

La vitesse de rotation des vis est de 150 tours/min pour un débit matière de 5 kg/h. Les différents produits sont prémélangés au tonneau. La viscosité élongationnelle des polymères du propylène est déterminée au moyen d'un rhéomètre commercialisé par RHEOMETRICS sous la dénomination RHEOMETRICS EXTENSIONAL RHEOMETER RER 9000. Les courbes reprises dans les figures 1 et 2 annexées (appelées ci-après diagrammes RER) reprennent la variation, à 190 °C, de la viscosité élongationnelle à l'état fondu (exprimée en Pa.s) en fonction du temps (exprimé en s) pour un gradient d'élongation (exprimée en s⁻¹) de 0,1.

### Exemple 1R (exemple de comparaison)

On alimente l'extrudeuse avec 3000 g d'un homopolymère du propylène commercialisé sous la dénomination ELTEX® P HL 001 P par la société SOLVAY.

Le diagramme RER représenté à la courbe 1 de la figure 1 montre l'absence de durcissement structural sous contrainte: la viscosité élongationnelle diminue jusqu'à la rupture ductile de l'échantillon.

### Exemple 2 (selon l'invention)

On alimente l'extrudeuse avec un mélange contenant :
- 3000 g d'homopolymère ELTEX P HL 001 P;
- 36 g de triméthylol-propane-triacrylate (TMPTA);
- 0,75 g de 2,5-diméthyl-2,5-di-tertbutylperoxyhexane (DHBP);
- 0,75 g de disulfure de tétraéthylthiurame (TDS).

Le diagramme RER représenté à la courbe 2 de la figure 1 montre une augmentation de la viscosité élongationnelle en fonction du temps. Le polymère présente donc du durcissement structural sous contrainte.

### Exemple 3R (exemple de comparaison)

On reproduit l'exemple 2 sauf que l'on omet le TDS.

Le diagramme RER représenté à la figure 1 (courbe 3) montre l'absence de durcissement structural sous contrainte.

### Exemples 4 à 7 (selon l'invention)

On alimente l'extrudeuse avec des mélanges semblables à celui de l'exemple 2 sauf que l'on met en oeuvre 0,75 g de TDS à l'exemple 4, 0,60 g de TDS à l'exemple 5, 0,45 g de TDS à l'exemple 6 et 0,30 g de TDS à l'exemple 7.

Les diagrammes RER représentés à la figure 2 (courbes 1 à 4) montrent un phénomène de durcissement structural sous contrainte dont l'amplitude est liée à la quantité de TDS mise en oeuvre.

## Revendications

1. Polymère du propylène obtenu par mélange en fondu de :
- 100 parties en poids de polypropylène;
- de 0,01 à 10 parties en poids d'un composé fonctionnel (a) comprenant au moins 2 groupements acrylate;
- au moins 0,005 partie en poids d'un composé soufré (b) choisi parmi les sulfures de thiurame, et
- de 0,01 à 5 parties en poids d'un composé (c) susceptible de générer des radicaux libres.

2. Polymère du propylène selon la revendication 1, dans lequel le polypropylène est un copolymère à blocs du propylène contenant de 30 à 90 % en poids d'un premier bloc qui est un homopolymère du propylène et de 70 à 10 % en poids d'un second bloc qui est un copolymère statistique du propylène contenant de 40 à 60 % en mole d'éthylène.

3. Polymère du propylène selon la revendication 1 ou 2, dans lequel le composé fonctionnel (a) contient de 3 à 5 groupements acrylate.

4. Polymère du propylène selon l'une quelconque des revendications 1 à 3, dans lequel la quantité de composé fonctionnel (a) est de 0,5 à 2 parties en poids.

5. Polymère du propylène selon l'une quelconque des revendications 1 à 4, dans lequel le sulfure de thiurame (composé (b)) répond à la formule générale 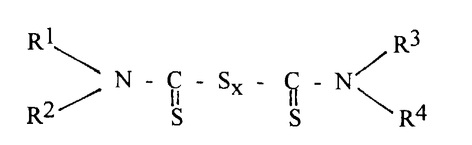 dans laquelle x est égal à 2, R¹, R², R³ et R⁴, qui peuvent être identiques ou différents, représentent un radical alkyle renfermant de 1 à 10 atomes de carbone ou un radical phényle, R¹ et R² et R³ et R⁴ pouvant respectivement former ensemble un radical divalent de formule -(CH₂)ₙ- où n est égal à 5 ou 6.

6. Polymère du propylène selon l'une quelconque des revendications 1 à 5, dans lequel la quantité de composé (b) est de 0,015 à 0,05 partie en poids.

7. Polymère du propylène selon l'une quelconque des revendications 1 à 6, présentant, à l'état fondu, une augmentation de la résistance à la déformation lors de l'allongement ou de l'extension.

8. Utilisation d'un polymère du propylène selon la revendication 7, pour l'obtention d'objets façonnés par extrusion- ou injection-soufflage, thermoformage ou enduction et pour la fabrication de mousses.

9. Objet façonné contenant un polymère du propylène selon l'une quelconque des revendications 1 à 7.

10. Procédé d'obtention d'un polymère du propylène comprenant une étape de mélange en fondu de :
- 100 parties en poids d'un polypropylène;
- de 0,01 à 10 parties en poids d'un composé fonctionnel (a) choisi parmi les composés comprenant au moins 2 groupements acrylate;
- au moins 0,005 partie en poids d'un composé soufré (b) choisi parmi les sulfures de thiurame; et
- de 0,01 à 5 parties en poids d'un composé (c) susceptible de générer des radicaux libres.

## Claims

1. propylene polymer obtained by melt-blending :
- 100 parts by weight of polypropylene;
- from 0.01 to 10 parts by weight of a functional compound (a) comprising at least 2 acrylate groups;
- at least 0.005 part by weight of a sulphur-containing compound (b) chosen from thiuram sulphides, and
- from 0.01 to 5 parts by weight of a compound (c) capable of generating free radicals.

2. Propylene polymer according to Claim 1, in which the polypropylene is a propylene block copolymer containing from 30 to 90% by weight of a first block which is a propylene homopolymer and from 70 to 10% by weight of a second block which is a random propylene copolymer containing from 40 to 60 mol % of ethylene.

3. Propylene polymer according to Claim 1 or 2, in which the functional compound (a) contains from 3 to 5 acrylate groups.

4. Propylene polymer according to any one of Claims 1 to 3, in which the amount of functional compound (a) is from 0.5 to 2 parts by weight.

5. Propylene polymer according to any one of Claims 1 to 4, in which the thiuram sulphide (compound (b)) corresponds to the general formula 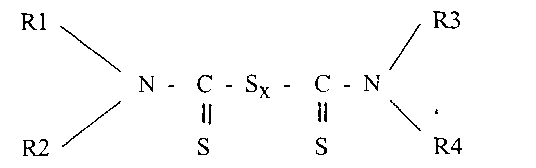 in which x is equal to 2 and R¹, R², R³ and R⁴, which can be identical or different, represent an alkyl radical containing from 1 to 10 carbon atoms or a phenyl radical, it being possible for R¹ and R² and R³ and R⁴ respectively to form together a divalent radical of formula -(CH₂)ₙ- where n is equal to 5 or 6.

6. Propylene polymer according to any one of Claims 1 to 5, in which the amount of compound (b) is from 0.015 to 0.05 part by weight.

7. Propylene polymer according to any one of Claims 1 to 6 exhibiting, in the molten state, an increase in the resistance to deformation during elongation or extension.

8. Use of a propylene polymer according to Claim 7, for obtaining objects shaped by blow-extrusion or injection blow moulding, thermoforming or coating and for the manufacture of foams.

9. Shaped object containing a propylene polymer according to any one of Claims 1 to 7.

10. Process for obtaining a propylene polymer including a stage of melt-blending of:
- 100 parts by weight of a polypropylene;
- from 0.01 to 10 parts by weight of a functional compound (a) chosen from compounds comprising at least 2 acrylate groups;
- at least 0.005 part by weight of a sulphur-containing compound (b) chosen from thiuram sulphides; and
- from 0.01 to 5 parts by weight of a compound (c) capable of generating free radicals.

## Patentansprüche

1. Propylenpolymer, das durch Mischen in der Schmelze von:
- 100 Gewichtsteilen Polypropylen;
- 0,01 bis 10 Gewichtsteilen einer funktionellen Verbindung (a), die wenigstens 2 Acrylatgruppen umfaßt;
- wenigstens 0.005 Gewichtsteil einer Schwefelverbindung (b), die unter den Thiuramsulfiden ausgewählt ist, und
- 0,01 bis 5 Gewichtsteilen einer Verbindung (c), die freie Radikale erzeugen kann, erhalten wird.

2. Propylenpolymer gemäß Anspruch 1, in dem das Polypropylen ein Propylen-Blockcopolymer ist, das 30 bis 90 Gew.-% eines ersten Blocks, der ein Propylen-Homopolymer ist, und 70 bis 10 Gew.-% eines zweiten Blocks, der ein statistisches Propylen-Copolymer mit 40 bis 60 Mol-% Ethylen ist, enthält.

3. Propylenpolymer gemäß Anspruch 1 oder 2, in dem die funktionelle Verbindung (a) 3 bis 5 Acrylatgruppen enthält.

4. Propylenpolymer gemäß einem der Ansprüche 1 bis 3, in dem die Menge an funktioneller Verbindung (a) 0,5 bis 2 Gewichtsteile beträgt.

5. Propylenpolymer gemäß einem der Ansprüche 1 bis 4, in dem das Thiuramsulfid (Verbindung (b)) der allgemeinen Formel 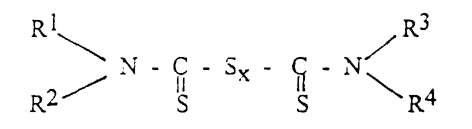 entspricht, in der x gleich 2 ist, R¹, R², R³ und R⁴, die identisch oder verschieden sein können, einen Alkylrest, der 1 bis 10 Kohlenstoffatome enthält, oder einen Phenylrest darstellen, wobei R¹ und R² und R³ und R⁴ jeweils zusammen einen zweiwertigen Rest der Formel -(CH₂)ₙ-, worin n gleich 5 oder 6 ist, bilden können.

6. Propylenpolymer gemäß einem der Ansprüche 1 bis 5, in dem die Menge an Verbindung (b) 0,015 bis 0,05 Gewichtsteil beträgt.

7. Propylenpolymer gemäß einem der Ansprüche 1 bis 6, das im geschmolzenen Zustand eine Erhöhung des Verformungswiderstands bei der Dehnung oder Streckung aufweist.

8. Verwendung eines Propylenpolymers gemäß Anspruch 7 zum Erhalt von Gegenständen, die durch Extrusions- oder Spritzblasen, Warmformen oder Auftragen gestaltet werden, und für die Herstellung von Schäumen.

9. Formgegenstände, die ein Propylenpolymer gemäß einem der Ansprüche 1 bis 7 enthalten.

10. Verfahren zum Erhalt eines Propylenpolymers, das einen Schritt des Mischens in der Schmelze von:
- 100 Gewichtsteilen eines Polypropylens;
- 0,01 bis 10 Gewichtsteilen einer funktionellen Verbindung (a), die unter den Verbindungen ausgewählt ist, die wenigstens 2 Acrylatgruppen enthalten;
- wenigstens 0,005 Gewichtsteil einer Schwefelverbindung (b), die unter den Thiuramsulfiden ausgewählt ist; und
- 0,01 bis 5 Gewichtsteilen einer Verbindung (c), die freie Radikale erzeugen kann, enthält.
